Europäisches Patentamt

European Patent Office

Office européen des brevets

(11) Veröffentlichungsnummer: **0 346 722 B1**

(12) **EUROPÄISCHE PATENTSCHRIFT**

(45) Veröffentlichungstag der Patentschrift:
**11.09.91 Patentblatt 91/37**

(51) Int. Cl.⁵: **G01T 1/29**

(21) Anmeldenummer: **89110168.5**

(22) Anmeldetag: **05.06.89**

(54) **Röntgendiagnostikeinrichtung mit einem Speicherleuchtschirm.**

(30) Priorität: **16.06.88 DE 3820582**

(43) Veröffentlichungstag der Anmeldung:
**20.12.89 Patentblatt 89/51**

(45) Bekanntmachung des Hinweises auf die
Patenterteilung:
**11.09.91 Patentblatt 91/37**

(84) Benannte Vertragsstaaten:
**DE FR GB IT**

(56) Entgegenhaltungen:
**EP-A- 0 077 678**
**EP-A- 0 112 469**
**EP-A- 0 213 428**
**US-A- 4 346 295**

(73) Patentinhaber: **Siemens Aktiengesellschaft**
**Wittelsbacherplatz 2**
**W-8000 München 2 (DE)**

(72) Erfinder: **Kuhn, Herbert, Dipl.-Phys.**
**Zellerstrasse 2**
**W-8521 Hessdorf (DE)**

## Beschreibung

Die Erfindung betrifft eine Röntgendiagnostikeinrichtung mit einem Speicherleuchtschirm für die latente Speicherung des jeweiligen Röntgenstrahlenbildes, der zwei durch einen Träger getrennte Speicherschichten aufweist, mit einer Röntgenaufnahmevorrichtung zur Erzeugung des Röntgenstrahlenbildes, mit einer Auslesevorrichtung für die zwei Speicherschichten, bei der zur Bildwiedergabe der Speicherleuchtschirm durch eine flächenförmige Abtastung mittels einer punktförmigen Strahlenquelle bildpunktweise zum Leuchten angeregt wird, mit einer Detektorvorrichtung zum Erfassen des von dem Speicherleuchtschirm emittierten Lichtes und mit einem Bildwiedergabesystem.

In der DE-A-3529306 ist eine derartige Röntgendiagnostikeinrichtung beschrieben, bei der als strahlenempfindlicher Wandler ein Leuchtschirm aus einem photostimulierbaren Speicherleuchtstoff mit Röntgenstrahlen bestrahlt wird, so daß in ihm Defektelektronen erzeugt werden, die in Potentialfallen (Traps) gespeichert werden. In einer Auslesevorrichtung wird die gesamte Fläche dieses Speicherleuchtschirmes von einer zusätzlichen Strahlenquelle, beispielsweise einem Laser, bildpunktweise abgetastet, so daß die in den Traps gespeicherten Elektronen angeregt werden und in Rekombinationszentren zurückfallen können, wobei die Energiedifferenz in Form von Lichtquanten abgestrahlt wird. Dadurch ist es möglich, das derart gespeicherte Röntgenstrahlenbild aus dem Speicherleuchtschirm auszulesen.

Der Speicherleuchtschirm weist zwei durch eine lichtundurchlässige Schicht getrennte Leuchtstoffschichten auf, die zur flächenförmigen Abtastung beispielsweise durch einen Spiegel in vertikaler Richtung abgelenkt, wobei durch einen Strahlenteiler der Strahl aufgeteilt wird, so daß gleichzeitig beide Leuchtstoffschichten abgetastet werden. Durch die Ablenkung werden alle auf dem Speicherleuchtschirm liegenden Bildpunkte nacheinander abgetastet. Durch Bewegen des Speicherleuchtschirmes senkrecht zur zeilenförmigen Abtastung wird die gesamte Fläche abgetastet. Das von den Speicherleuchtstoffschichten emittierte Licht wird durch zwei optische Kollektoren erfaßt und auf die lichtempfindlichen Eingangsflächen zweier Detektoren abgebildet. Das Ausgangssignal beider Detektoren wird beispielsweise einer Fernsehkette zur Wiedergabe des Röntgenbildes auf einem Monitor zugeführt, wobei die Ausgangssignale beider Detektoren zusammengefaßt werden.

Anstelle des aufgeteilten Laserstrahles können aber auch zwei Strahlenquellen Verwendung finden, die eine getrennte Abtastung beider Leuchtstoffschichten bewirken. Die Synchronisation kann dabei bei der Ablenkung beider Abtaststrahlen erfolgen, so daß zueinander gehörende Bildpunkte von beiden Speicherleuchtstoffschichten gleichzeitig ausgelesen werden. Eine Synchronisation kann aber auch erst auf elektronischem Wege in einer den Detektoren nachgeschalteten Verarbeitungsschaltung erfolgen.

Durch die Verwendung zweier Speicherschichten für einen Speicherleuchtschirm hat man dem Rechnung getragen, daß mit zunehmender Dicke der Leuchtstoffschicht sich zwar der Wirkungsgrad verbessert, da mehr Röntgenstrahlung absorbiert wird, aber die Bilder unschärfer werden, so daß feine Details nicht mehr hinreichend gut dargestellt werden können. Durch die Verwendung der beiden Leuchtstoffschichten und getrennte Auslesung wird erreicht, daß der Wirkungsgrad größer und das Bild noch ausreichend scharf ist. Nachteilig ist aber die aufwendige Anordnung der beiden Abtastsysteme.

In der DE-C-2951501 ist ebenfalls eine Röntgendiagnostikeinrichtung beschrieben, bei der ein Speicherleuchtschirm mit einer Leuchtstoffschicht von einem Abtaststrahl abgetastet wird, während zu beiden Seiten des Speicherleuchtschirmes die Detektoren angeordnet sind, die das nach oben emittierte Licht und das nach unten emittierte Licht auffangen. Dadurch erzielt man eine höhere Lichtausbeute und einen verbesserten Hell-Dunkelkontrast. Es wird aber entweder gleich viel Röntgenstrahlung absorbiert, da die Leuchtstoffschicht genauso dünn wie bisher ist, oder aber bei dickerer Leuchtstoffschicht verringert sich die Schärfe und damit die Bildqualität.

Die Erfindung geht von der Aufgabe aus, eine Röntgendiagnostikeinrichtung der eingangs genannten Art zu schaffen, die eine einfache und bildpunktgenaue Abtastung beider Speicherschichten ermöglicht.

Die Aufgabe wird erfindungsgemäß dadurch gelöst, daß der Träger für das Licht der Strahlenquelle durchlässig, für das von dem Speicherleuchtschirm emittierte Licht aber undurchdringlich ist und daß die Strahlenquelle so angeordnet und ausgebildet ist, daß der Speicherleuchtschirm nur von einer Seite abgetastet wird. Dadurch entfällt die Aufteilung und die entsprechende Führung der Abtaststrahlen bzw. die Synchronisation der Ablenkung zweier getrennter Laserstrahlen. Trotzdem wird die Auflösung erhöht, da das emittierte Licht der Speicherschichten nicht die andere Speicherschicht beeinflussen kann, so daß für den jeweiligen Detektor nur das Licht der ihm zugeordneten Speicherschicht zugeführt wird.

Die Erfindung geht dabei von der Überlegung aus, daß bei flächenhaften Empfängern die Bildqualität im wesentlichen durch das Signal-Rausch-Verhältnis bestimmt wird. Dieses Rauschen, das bei hochempfindlichen Systemen vorwiegend aus Quantenrauschen besteht, verringert sich bei zunehmender Anzahl absorbierter Röntgenquanten, also bei Vergrößerung der wirksamen Schichtdicke. Außerdem wird dabei die Empfindlichkeit eines solchen Systems größer, so daß eine Reduktion der Patientendosis erfolgt. Durch die

2

Aufteilung der Leuchtstoffschicht in zwei bei der Abtastung getrennt wirkende Schichten bleibt die Bildschärfe erhalten. Durch die gleichzeitige Abtastung beider Speicherschichten durch einen Abtaststrahl erhält man auf einfache Weise eine Synchronisation beider Abtastungen, so daß beide ausgelesenen Signalwerte exakt bildpunktweise übereinstimmen.

Das Signal sowie der Rauschabstand werden vergrößert, wenn die Detektorvorrichtung zwei jeweils einer Speicherschicht zugeordnete Detektoren aufweist. Dadurch wird erreicht, daß beide Speicherschichten gleichzeitig ausgelesen werden können. Aufnahmen mit unterschiedlicher Auflösung können erreicht werden, wenn die den Röntgenstrahlen und dem Abtaststrahl der Strahlenquelle zugewandte erste Speicherschicht dünner ausgebildet ist als die den Strahlen abgewandte zweite Speicherschicht.

Die Erfindung ist nachfolgend anhand eines in der Zeichnung dargestellten Ausführungsbeispieles näher dargestellt. Es zeigen :

FIG 1    den Aufnahmeteil einer Röntgendiagnostikeinrichtung mit einem erfindungsgemäßen Speicherleuchtschirm und

FIG 2    den Wiedergabeteil einer erfindungsgemäßen Röngendiagnostikeinrichtung.

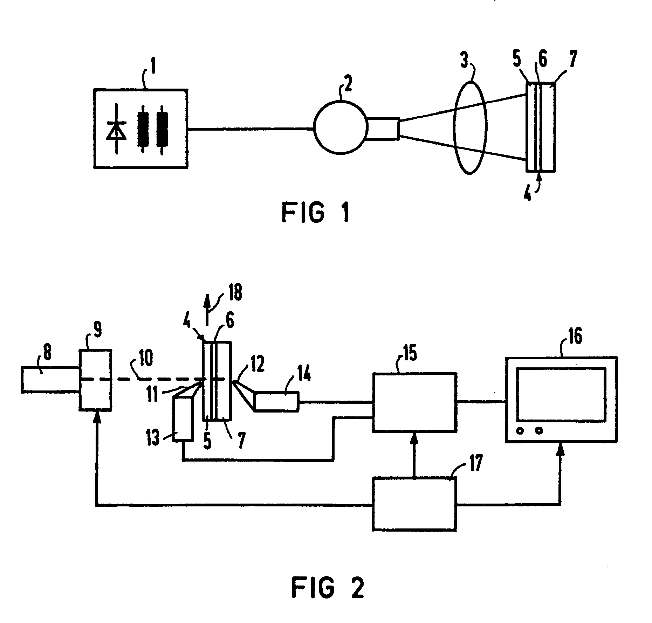

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4, wie bereits beschrieben, Defektelektronen, die in Potentialfallen des Speicherleuchtstoffes gespeichert werden, so daß in dem Speicherleuchtschirm 4 ein latentes Bild gespeichert ist.

Erfindungsgemäß besteht dieser Speicherleuchtschirm 4 aus einer ersten Speicherschicht 5, die durch einen Träger 6 von einer zweiten Speicherschicht 7 getrennt ist. Die der Röntgenröhre 2 zugewandte erste Speicherschicht 5 kann dabei dünner als die zweite Speicherschicht 7 ausgeführt sein. Der Träger 6 beeinflußt die Röntgenstrahlen nicht oder nur unwesentlich.

Zur Wiedergabe des latenten, gespeicherten Bildes wird, wie in FIG 2 dargestellt, der Speicherleuchtschirm 4 durch eine Strahlenquelle, beispielsweise einen Laser 8, angeregt. Dem Laser 8 ist eine Ablenkvorrichtung 9 vorgeschaltet, die den Abtaststrahl 10 zeilenweise über den Speicherleuchtschirm 4 ablenkt. Die Ablenkvorrichtung 9 kann beispielsweise aus einem Ablenkspiegel für die vertikale Ablenkung bestehen. Für die horizontale Ablenkung kann der Speicherleuchtschirm 4 entlang des Pfeiles 18 verschoben werden.

Der Abtaststrahl 10 regt bildpunktweise den Speicherleuchtstoff in der ersten Speicherschicht 5 an und durchdringt den Träger 6, so daß eine Anregung des gleichen Bildpunktes in dem Speicherleuchtstoff der beispielsweise dicker ausgeführten zweiten Speicherschicht 7 erfolgt. Der Träger 6 ist dabei für Licht von der Wellenlänge des Abtaststrahles 10 durchlässig. Der in den Speicherschichten 5 und 7 enthaltene Speicherleuchtstoff emittiert entsprechend seiner Bestrahlung Licht einer anderen Wellenlänge, für die der Träger 6 undurchlässig ist. Dadurch kann das von der ersten Speicherschicht 5 emittierte Licht nur von einem ersten Lichtleiter 11 erfaßt und auf einen ersten Detektor 13 geleitet werden. Das von der zweiten Speicherschicht 7 emittierte Licht wird durch einen zweiten Lichtleiter 12 erfaßt und einem zweiten Detektor 14 zugeführt.

Diese Detektoren 13 und 14 erfassen die Helligkeit der abgetasteten Bildpunkte und wandeln diese in elektrische Signale um, die einer Wiedergabeschaltung 15 zugeführt werden. Die Wiedergabeschaltung 15 faßt die einzelnen analogen Ausgangssignale der Detektoren 13 und 14 zusammen und wandelt sie in ein gemeinsames Videosignal zur Darstellung auf einem Monitor 16 um.

Eine Steuereinrichtung 17 bewirkt bei der Wiedergabe die Synchronisation der Ablenkvorrichtung 9, der Wiedergabeschaltung 15 und des Monitors 16. Die Wiedergabeschaltung 15 kann in bekannter Weise eine Additionsstufe, Bildspeicher, eine Verarbeitungsschaltung und Wandler aufweisen.

Der Speicherleuchtschirm 4 kann beispielsweise von einem He-Ne-Laser abgetastet werden, dessen Licht eine Wellenlänge von 633 nm aufweist. Bei Verwendung eines Speicherleuchtstoffes beispielsweise vom Typ BaFBr beträgt das Wellenlängenmaximum des emittierten Lichtes etwa 400 nm. Durch Verwendung eines optischen Filters, beispielsweise des Kodak Wratten Nr. 8, in der Schicht des Trägers 6 wird das Laserlicht durchgelassen, während das emittierte Licht zurückgehalten wird. Durch gleichzeitige Stimulierung beider Speicherschichten 5 und 7 durch den gleichen Abtaststrahl 10 erhält man automatisch eine pixelgenaue Übereinstimmung der ausgelesen Signalwerte jeder Speicherschicht 5 und 7. Durch die Addition der registrierten Signalwerte in der Wiedergabeschaltung 15 ergibt sich ein resultierendes Bild, in dem die Signale etwa doppelt so hoch sind wie bei einer einzigen Schicht, während das störende Rauschen nur auf den Faktor $\sqrt{2}$ ansteigt. Das resultierende Bild zeigt also bei gleicher Patientendosis eine bessere Bildqualität.

Bei einem derartigen Speicherleuchtschirm 4 können, wie dargestellt, die beiden Speicherschichten 5 und 7 unterschiedliche Dicken aufweisen. Wegen der Röntgenstrahlenabsorption in der ersten Speicherschicht 5 ist es sinnvoll, die hintere Schicht 7 dicker als die vordere auszuführen.

Derartige Speicherleuchtschirme 4 können aber auch in einem Abtaster verwendet werden, der nur eine Schicht auslesen kann, d.h. er weist nur einen Detektor auf. Weisen die Schichten 5 und 7 eines solchen Speicherleuchtschirmes 4 stark unterschiedliche Dicken auf, so zeigt das Bild der dünnen ersten Speicherschicht eine bessere Auflösung als das der dicken zweiten Spei cherschicht. Ein derartiger Speicherleuchtschirm 4 kann dann sowohl als feinzeichnende als auch als hochempfindliche Folie verwendet werden, je nachdem welche der beiden Speicherschichten 5 und 7 in dem Abtaster ausgelesen werden. Hierzu muß selbstverständlich bei der Röntgenaufnahme der Speicherleuchtschirm sich so in der Kassette befinden, daß die auszulesende Speicherschicht als Vorderschicht fungiert. Dadurch lassen sich in einer Röntgenabteilung einheitliche Speicherleuchtschirme 4 verwenden, die je nach Zweck als feinzeichnende, hochempfindliche oder doppelschichtige Folie ausgelesen werden.

## Patentansprüche

1. Röntgendiagnostikeinrichtung mit einem Speicherleuchtschirm (4) für die latente Speicherung des jeweiligen Röntgenstrahlenbildes, der zwei durch einen Träger (6) getrennte Speicherschichten (5, 7) aufweist, mit einer Röntgenaufnahmevorrichtung (1, 2) zur Erzeugung des Röntgenstrahlenbildes, mit einer Auslesevorrichtung (8 bis 17) für die zwei Speicherschichten (5, 7), bei der zur Bildwiedergabe der Speicherleuchtschirm (4) durch eine flächenförmige Abtastung mittels einer punktförmigen Strahlenquelle (8) bildpunktweise zum Leuchten angeregt wird, mit einer Detektorvorrichtung (13, 14) zum Erfassen des von dem Speicherleuchtschirm (4) emittierten Lichtes und mit einem Bildwiedergabesystem (16), **dadurch gekennzeichnet,** daß der Träger (6) für das Licht der Strahlenquelle (8) durchlässig, für das von dem Speicherleuchtschirm (4) emittierte Licht aber undurchdringlich ist und daß die Strahlenquelle (8) so angeordnet und ausgebildet ist, daß der Speicherleuchtschirm (4) nur von einer Seite abgetastet wird.

2. Röntgendiagnostikeinrichtung nach Anspruch 1, **dadurch gekennzeichnet,** daß die Detektorvorrichtung (13, 14) zwei jeweils einer Speicherschicht (5, 7) zugeordnete Detektoren (13, 14) aufweist.

3. Röntgendiagnostikeinrichtung nach Anspruch 1 oder 2, **dadurch gekennzeichnet,** daß die den Röntgenstrahlen und dem Abtaststrahl (10) der Strahlenquelle (8) zugewandte erste Speicherschicht (5) dünner ausgebildet ist als die den Strahlen abgewandte zweite Speicherschicht (7).

## Claims

1. X-ray diagnostic device having a luminescent storage screen (4) for the latent storage of the respective X-ray image, which screen (4) has two storage layers (5, 7) separated by a carrier (6), the said device having an X-ray photographic apparatus (1, 2) for producing the X-ray image, having a read-out apparatus (8 to 17) for the two storage layers (5, 7), in which, for image reproduction, the luminescent storage screen (4) is excited to luminescence pixel-by-pixel by planiform scanning by means of a point beam source (8), having a detector apparatus (13, 14) for detecting the light emitted by the luminescent storage screen (4) and having an image reproduction system (16), **characterised in that** the carrier (6) is transmissive to the light from the beam source (8) but is impenetrable to the light emitted by the luminescent storage screen (4), and in that the beam source (8) is arranged and constructed so that the luminescent storage screen (4) is scanned from one side only.

2. X-ray diagnostic device according to claim 1, **characterised in that** the detector apparatus (13, 14) has two detectors (13, 14) each assigned to a storage layer (5, 7).

3. X-ray diagnostic device according to claim 1 or 2, **characterised in that** the first storage layer (5), which faces towards the X-rays and the scanning beam (10) from the beam source (8), is formed so that it is thinner than the second storage layer (7), which faces away from the beams.

## Revendications

1. Appareil de radiodiagnostic comportant un écran luminescent de mémorisation (4), qui sert à réaliser la mémorisation latente de l'image radiographique respective et comporte deux couches de mémorisation (5, 7) séparées par un support (6), un dispositif d'enregistrement radiographique (1, 2) servant à former l'image radiographique, un dispositif de lecture (8 à 17) pour les deux couches de mémorisation (6, 7), l'écran luminescent de mémorisation (4) étant excité de manière à s'éclairer pour des points de l'image, pour la reproduction de cette dernière, au moyen d'une exploration sur une certaine surface à l'aide d'une source ponctuelle de rayonnement (8), un dispositif de détection (13, 14) servant à détecter la lumière émise par l'écran luminescent de mémorisation (4) et un système de reproduction d'images (16), caractérisé par le fait que le support (6) est transparent pour la lumière de la source de rayonnement (8), mais est opaque pour la lumière émise par l'écran luminescent de mémorisation (4), et que la source de rayonnement (8) est disposée et agencée de telle sorte que l'écran luminescent de mémorisation (4) est exploré uniquement sur une face.

2. Appareil de radiodiagnostic suivant la revendication 1, caractérisé par le fait que le dispositif de détection (13, 14) comporte deux détecteurs (13, 14) associés respectivement à une couche de mémorisation (5, 7).

3. Appareil de radiodiagnostic suivant la revendication 1 ou 2, caractérisé par le fait que la première couche de mémorisation (5), tournée vers le rayonnement X et le faisceau d'exploration (10) de la source de rayonnement (8), est plus mince que la seconde couche de mémorisation (7) située à l'opposé du rayonnement.

FIG 1

FIG 2